# EUROPÄISCHE PATENTSCHRIFT

(11) **EP 3 513 152 B1**
(45) Veröffentlichungstag und Bekanntmachung des Hinweises auf die Patenterteilung: **05.05.2021**
(21) Anmeldenummer: 17764605.6
(22) Anmeldetag: 11.09.2017
(51) Int. Cl.: G01F 23/296, G01N 11/16, G01F 25/00, G01N 9/00, G01N 11/00

(54) **KOMPENSATION EINER PHASENVERSCHIEBUNG ZUMINDEST EINER KOMPONENTE EINER ELEKTRONIK EINES VIBRONISCHEN SENSORS**
COMPENSATION OF A PHASE SHIFT OF AT LEAST ONE ELECTRONIC COMPONENT OF A VIBRONIC SENSOR
COMPENSATION D'UN CHANGEMENT DE PHASE D'AU MOINS UN COMPOSANT ÉLECTRONIQUE D'UN CAPTEUR VIBRONIQUE

(30) Priorität: 13.09.2016 DE 102016117194
(43) Veröffentlichungstag der Anmeldung: 24.07.2019
(73) Patentinhaber: Endress+Hauser SE+Co. KG, 79689 Maulburg (DE)
(72) Erfinder: BRENGARTNER, Tobias, 79312 Emmendingen (DE); SAUTERMEISTER, Manuel, 79650 Schopfheim (DE); GIRARDEY, Romuald, 68730 Blotzheim (FR)
(74) Vertreter: Andres, Angelika Maria
(86) Internationale Anmeldenummer: PCT/EP2017/072749
(87) Internationale Veröffentlichungsnummer: WO 2018/050595

(56) Entgegenhaltungen:
- WO-A1-97/49980
- DE-A1-102005 015 547
- DE-A1-102006 034 105
- DE-A1-102010 030 982
- US-A- 4 488 427
- US-A1- 2005 052 813

## Beschreibung

Die vorliegende Erfindung betrifft eine Kompensationsvorrichtung zur Kompensation zumindest einer durch zumindest eine Komponente einer Elektronikeinheit eines vibronischen Sensors hervorgerufene Phasenverschiebung, einen vibronischen Sensor zur Bestimmung und/oder Überwachung zumindest einer Prozessgröße eines Mediums mit einer entsprechenden Kompensationsvorrichtung sowie ein Verfahren zum Betreiben des entsprechenden vibronischen Sensors.

Vibronische Sensoren finden vielfach Anwendung in der Prozess- und/oder Automatisierungstechnik. Im Falle von Füllstandsmessgeräten weisen sie zumindest eine mechanisch schwingfähige Einheit, wie beispielsweise eine Schwinggabel, einen Einstab oder eine Membran auf. Diese wird im Betrieb mittels einer Antriebs-/Empfangseinheit, häufig in Form einer elektromechanischen Wandlereinheit zu mechanischen Schwingungen angeregt, welche wiederum beispielsweise ein piezoelektrischer Antrieb oder ein elektromagnetischer Antrieb sein kann. Die mechanisch schwingfähige Einheit kann im Falle von Durchflussmessgeräten aber auch als schwingfähiges Rohr ausgebildet sein, welches von dem jeweiligen Medium durchflossen wird, wie beispielsweise in einem nach dem Coriolis-Prinzip arbeitenden Messgerät.

Entsprechende Feldgeräte werden von der Anmelderin in großer Vielfalt hergestellt und im Falle von Füllstandsmessgeräten beispielsweise unter der Bezeichnung LIQUIPHANT oder SOLIPHANT vertrieben. Die zugrundeliegenden Messprinzipien sind im Prinzip aus einer Vielzahl von Veröffentlichungen bekannt. Die Antriebs-/Empfangseinheit regt die mechanisch schwingfähige Einheit mittels eines elektrischen Anregesignals zu mechanischen Schwingungen an. Umgekehrt kann die Antriebs-/Empfangseinheit die mechanischen Schwingungen der mechanisch schwingfähigen Einheit empfangen und in ein elektrisches Empfangssignal umwandeln. Bei der Antriebs-/Empfangseinheit handelt es sich entsprechend entweder um eine separate Antriebseinheit und eine separate Empfangseinheit, oder um eine kombinierte Antriebs-/Empfangseinheit. Dabei ist die Antriebs-/Empfangseinheit in vielen Fällen Teil eines rückgekoppelten elektrischen Schwingkreises, mittels welchem die Anregung der mechanisch schwingfähigen Einheit zu mechanischen Schwingungen erfolgt. Beispielsweise muss für eine resonante Schwingung die Schwingkreisbedingung, gemäß welcher die Summe aller Verstärkungen im Schwingkreis, bzw. der Verstärkungsfaktor ≥1 ist und alle im Schwingkreis auftretenden Phasen ein Vielfaches von 360° ergeben, erfüllt sein.

Zur Anregung des vibronischen Sensors und damit einhergehend zur Erfüllung der Schwingkreisbedingung muss eine bestimmte Phasenverschiebung zwischen dem Anregesignal und dem Empfangssignal gewährleistet sein. Deshalb wird häufig ein vorgebbarer Wert für die Phasenverschiebung, also ein Sollwert für die Phasenverschiebung zwischen dem Anregesignal und dem Empfangssignal eingestellt. Hierfür sind aus dem Stand der Technik unterschiedlichste Lösungen, mit sowohl analogen als auch digitalen Verfahren, bekannt geworden. Beispielsweise wird häufig eine vorgebbare Phasenverschiebung unter Verwendung eines geeigneten Filters eingestellt, oder die jeweils vorliegende Phasenverschiebung mittels eines Regelkreises auf eine vorgebbare Phasenverschiebung, den Sollwert, geregelt. Aus der DE102006034105A1 sowie aus der US 2005/052813 A1 ist in dieser Hinsicht bekannt geworden, einen einstellbaren Phasenschieber zu verwenden. Die zusätzliche Integration eines Verstärkers mit einstellbarem Verstärkungsfaktor zur zusätzlichen Regelung der Schwingungsamplitude wurde dagegen in der DE102007013557A1 beschrieben. Gemäß der DE102005015547A1 wird wiederum ein Allpass-Filters eingesetzt. Das Einstellen einer Phasenverschiebung zwischen Anrege- und Empfangssignal anhand der jeweils vorliegenden Frequenz des Empfangssignals ist außerdem mittels eines sogenannten Frequenzsuchlaufs, wie beispielsweise in der der DE102009026685A1, DE102009028022A1, und DE102010030982A1 offenbart, oder mittels einer Phasenregelschleife (engl. Phase-Locked-Loop, PLL), wie in der DE102010030982A1 beschrieben, möglich.

Grundsätzlich sind bei einem vibronischen Sensor sowohl das Anregesignal als auch das Empfangssignal charakterisiert durch ihre Frequenz f, Amplitude A und/oder Phase Φ. Entsprechend werden Änderungen in diesen Größen üblicherweise zur Bestimmung der jeweiligen Prozessgröße, wie einem vorgegebenen Füllstand, eines Durchflusses, der Dichte und/oder der Viskosität, herangezogen. Im Falle eines vibronischen Grenzstandschalters für Flüssigkeiten wird beispielsweise unterschieden, ob die schwingfähige Einheit von der Flüssigkeit bedeckt ist oder frei schwingt. Diese beiden Zustände, der Freizustand und der Bedecktzustand, werden dabei beispielsweise anhand unterschiedlicher Resonanzfrequenzen, also einer Frequenzverschiebung, bei Vorliegen einer vorgebbaren Phasenverschiebung zwischen Anregesignal und Empfangssignal, unterschieden. Die Dichte und/oder Viskosität wiederum lassen sich mit einem derartigen Messgerät nur ermitteln, wenn die schwingfähige Einheit vom Medium bedeckt ist. Für die Bestimmung der Dichte und/oder Viskosität geeignete vibronische Sensoren und entsprechende Messprinzipien sind beispielsweise aus den Dokumenten DE10057974A1, DE102006033819A1, DE10050299A1, oder auch DE102007043811A1 bekannt geworden.

Unabhängig davon, ob der Füllstand, die Dichte, oder die Viskosität zu bestimmen sind, ist eine vorgebbare Phasenverschiebung zwischen Anregesignal und Empfangssignal einzustellen, wobei die Messgenauigkeit eines entsprechenden Messgeräts grundsätzlich von der Einstellgenauigkeit der Phasenverschiebung abhängt. Dies gilt insbesondere und in besonders hohem Maße für den Fall der Bestimmung der Viskosität und/oder Dichte, deren zuverlässige Bestimmung eine Phaseneinstellgenauigkeit von etwa 1° erfordert.

Im laufenden Betrieb eines vibronischen Sensors kann es jedoch, bedingt durch die frequenzbasierte Anregung und Signalauswertung, aufgrund verschiedener Störeinflüsse, wie z. B. Fremdvibrationen, etwa Vibrationen von Pumpen oder auch Ultraschallbädern, zu Problemen bei der Bestimmung und/oder Überwachung der jeweiligen Prozessgröße kommen. Diese Störeinflüsse, welche insbesondere problematisch mit Hinblick auf die Einstellgenauigkeit der vorgebbaren Phasenverschiebung aufweisen, wirken sich dann also nachteilig auf die Messgenauigkeit des jeweiligen vibronischen Sensors aus. Zur Vermeidung einer durch entsprechende Störeinflüsse verringerten Messgenauigkeit oder Messperformance wird in der DE102012101667A1 vorgeschlagen, eine Regel-/Auswerteeinheit dazu zu konfigurieren, beim Vorliegen von zumindest einer Fremdvibration in Abhängigkeit der Frequenz und/oder der Amplitude der Fremdvibration die Schwingungsanregung derart zu steuern, dass das Empfangssignal von der Fremdvibration im Wesentlichen ungestört ist und/oder mindestens eine Frequenz einer Fremdvibration zu unterdrücken.

Ein ebenfalls gegenüber derartigen, insbesondere mechanischen, Störeinflüssen besonders unempfindlicher vibronischer Sensor ist aus der DE102014119061A1 bekannt geworden. Die Elektronikeinheit dieses Sensors umfasst zumindest ein adaptives Filter und ist dazu ausgestaltet, die Filtercharakteristik, welche die Eigenschaften des Filters beschreibt, derart passend einzustellen, dass eine vorgebbare Sollphasenverschiebung zwischen dem Anregesignal und dem Empfangssignal auftritt. Auf dieses Dokument wird im Folgenden vollumfänglich Bezug genommen.

Ein weiterer wichtiger Aspekt mit Hinblick auf die Einstellgenauigkeit einer vorgebbaren Phasenverschiebung sind die jeweils für die Herstellung des vibronischen Sensors verwendeten, insbesondere elektronischen, Komponenten. Die zu einem bestimmten Zeitpunkt jeweils vorliegende Phasenverschiebung zwischen Anregesignal und Empfangssignal ergibt sich nämlich aus Summation der durch die verwendeten Komponenten, insbesondere die Komponenten der Elektronikeinheit, jeweils verursachten Phasen. Diese sind, da sie wiederum selbst unter anderem von verschiedenen Prozessparametern, wie die Temperatur oder auch der Druck abhängen, nicht zwangsläufig zeitlich konstant. Um dieser Problematik zu begegnen, ist aus der bisher unveröffentlichten deutschen Patentanmeldung mit dem Aktenzeichen 102015112421.1 ein vibronischer Sensor mit einer Phasenkorrektureinheit vorgestellt worden, welche aus zumindest einer von zumindest einem Prozessparameter abhängeigen Kenngröße zumindest einer Komponente des Sensors einen Phasenkorrekturwert ermittelt, und die vorgebbare Phasenverschiebung zwischen Anrege- und Empfangssignal entsprechend des Phasenkorrekturwertes einstellt. Auch auf dieses Dokument wird im Folgenden vollumfänglich Bezug genommen.

Nun ist es so, dass neben den oben genannten Störeinflüssen und durch die Prozessparameter bedingten Einflüssen, die durch die einzelnen Komponenten hervorgerufenen Phasenverschiebungen selbst grundsätzlich gewissen Toleranzen unterliegen, was zu einem nachteiligen Einfluss auf die Messgenauigkeit des vibronischen Sensors führen kann. Um diesem Aspekt Rechnung zu tragen, werden ggf. aufwendige Kalibrierungen für jeden einzelnen Sensor vorgenommen.

Ausgehend von dieser Problematik liegt der vorliegenden Erfindung die Aufgabe zugrunde, einen vibronischen Sensor mit einer möglichst hohen Messgenauigkeit anzugeben.

Diese Aufgabe wird gelöst durch eine Kompensationsvorrichtung für einen vibronischen Sensor gemäß Anspruch 1, durch einen vibronischen Sensor gemäß Anspruch 8 sowie durch ein Verfahren zum Betreiben eines vibronischen Sensors gemäß Anspruch 10.

Bezüglich der Kompensationsvorrichtung löst die vorliegende Erfindung die ihr zugrunde liegende Aufgabe mit einer Kompensationsvorrichtung zur Kompensation zumindest einer durch zumindest eine Komponente einer Elektronikeinheit eines vibronischen Sensors hervorgerufene Phasenverschiebung, wobei der vibronische Sensor zumindest eine elektromechanische Wandlereinheit aufweist, und wobei es sich bei der zumindest einen Komponente (8a,8b,17a,17b) um eine analoge Eingangsstufe (8b) oder um eine analoge Ausgangsstufe (8a), beispielweise um einen Operationsverstärker, insbesondere einen Ladungsverstärker, einen Impedanzwandler, ein Filter, insbesondere ein Antialiasing-Filter, handelt, oder wobei es sich um einen Analog-Digital-Wandler (17b), einen Digital-Analog-Wandler (17a), eine Transistorstufe oder einen analogen Schalter des vibronischen Sensors (1) handelt. Diese Kompensationsvorrichtung umfasst zumindest:
- eine Überbrückungseinheit (11) zur elektrischen Überbrückung zumindest der elektromechanischen Wandlereinheit (5),
- eine Signalerzeugungseinheit (14) zur Erzeugung zumindest eines ersten Test-Anregesignals (U_{Atest1}) in Form eines elektrischen Wechselsignals mit einer ersten wählbaren Frequenz (f₁),
- eine Phasendetektionseinheit (15) zur Bestimmung zumindest einer vorliegenden ersten Phasenverschiebung (ΔΦₜₑₛₜ₁) zwischen dem Test-Anregesignal (U_{Atest1}) und zumindest einem ersten Test-Empfangssignal (U_{Etest1}), welches zumindest die Überbrückungseinheit (11) und die zumindest eine Komponente (8a,8b,17a,17b) der Elektronikeinheit (6) durchläuft, und
- eine Recheneinheit (16) welche zumindest aus der ersten Phasenverschiebung (ΔΦₜₑₛₜ₁) eine Phasenkompensationsvorschrift (σ) ermittelt,
wobei die Kompensationsvorrichtung (7) dazu ausgestaltet ist,
zur Bestimmung der Phasenkompensationsvorschrift (σ) zumindest die elektromechanische Wandlereinheit (5) des vibronischen Sensors (1) zu überbrücken, und
die Phasenkompensationsvorschrift (σ) an eine Phaseneinstelleinheit (9) der Elektronikeinheit (6) des vibronischen Sensors (1) zu übergeben, welche die Phasenkompensationsvorschrift (σ) bei der Einstellung einer vorgebbaren Phasenverschiebung (ΔΦ) berücksichtigt.

Die jeweils relevanten Komponenten des Sensors, welche zusätzliche Phasenverschiebungen zwischen Anrege- und Empfangssignal hervorrufen können, variieren je nach Aufbau, insbesondere der Elektronikeinheit, und je nach gewähltem Betriebsprinzip zur Erzeugung und Detektion der mechanischen Schwingungen des vibronischen Sensors. Insbesondere ist die vorliegende Erfindung sowohl auf analoge sowie auf digitale Elektronikeinheiten für einen vibronischen Sensor einsetzbar.

Dabei ist die Kompensationseinheit dazu ausgestaltet, die Phasenkompensationsvorschrift an eine Phaseneinstelleinheit der Elektronikeinheit des vibronischen Sensors zu übergeben.

Die Kompensationsvorrichtung dient also dazu, zumindest die Phasenverschiebung zumindest einer Komponente des vibronischen Sensors zu korrigieren bzw. zu kompensieren. Die durch die zumindest eine Komponente hervorgerufene Phasenverschiebung wird mittels der Kompensationsvorrichtung ermittelt und daraus eine Phasenkompensationsvorschrift berechnet, welche an die Elektronikeinheit übergeben wird. Die Elektronikeinheit wiederum berücksichtigt dann bei der Einstellung der vorgebbaren Phasenverschiebung die Phasenkompensationsvorschrift.

Es ist denkbar, dass die Kompensationsvorrichtung derart ausgestaltet ist, dass sie entweder nacheinander die durch jeweils einzelne Komponenten oder Gruppen von Komponenten hervorgerufenen Phasenverschiebungen ermittelt und anschließend aus den einzelnen Werten oder der Summe der einzelnen Phasenverschiebungen der jeweiligen Komponenten oder Komponenten-Gruppen die Phasenkompensationsvorschrift ermittelt. Alternativ kann sie jedoch auch derart ausgestaltet sein, dass sie während eines Vorgangs die Phasenverschiebungen aller jeweils relevanten Komponenten in der Summe ermittelt und aus diesem Wert die Phasenkompensationsvorschrift ermittelt.

In jedem Falle wird zur Bestimmung einer Phasenkompensationsvorschrift die elektromechanische Wandlereinheit elektrisch überbrückt. Zusätzlich können eine oder mehrere, insbesondere elektronische, Komponenten des Sensors, welche zusätzliche Phasenverschiebungen hervorrufen, überbrückt werden. Die Signalerzeugungseinheit ist wiederum zumindest zur Erzeugung eines Test-Anregesignals einer vorgebbaren ersten Frequenz ausgestaltet. Sie kann aber auch zur Erzeugung mehrerer Test-Anregesignale unterschiedlicher Frequenzen ausgebildet sein. Im letzten Falle lassen sich vorteilhaft ebenfalls Frequenzabhängigkeiten der durch einzelne Komponenten des Sensors hervorgerufenen Phasenverschiebungen kompensieren.

Die Phasenkompensationsvorschrift wird bevorzugt nicht während des fortlaufenden Messbetriebs ermittelt, sondern in einem separaten, im Folgenden als Kompensationsbetriebsmodus bezeichneten Intervall. Erfindungsgemäß kann die Kompensationsvorrichtung derart ausgestaltet sein, dass sie vor Inbetriebnahme des jeweiligen vibronischen Sensors eingesetzt wird. Sie kann dann beispielsweise einmalig an den Sensor angebracht werden. Vorteilhaft ist sie in der Lage, im Wesentlichen automatisiert und selbstständig die durch die elektronischen Komponenten des Sensors hervorgerufenen Phasenverschiebungen zu ermitteln und eine entsprechende Phasenkompensationsvorschrift zu erstellen. Somit entfallen aufwendige, separate Kalibrierungen und Abgleichvorgänge zur Berücksichtigung, beispielsweise von Fehlertoleranzen, der verwendeten Bauteile. Als Alternative kann die Kompensationseinheit auch als Teil des Sensors ausgestaltet sein. Im letzteren Falle ist es ebenfalls möglich, den Kompensationsbetriebsmodus in vorgebbaren Zeitabständen wiederholt auszuführen und somit auch zeitliche Veränderungen der durch die verschiedenen Komponenten hervorgerufenen Phasenverschiebungen zu berücksichtigen.

In einer Ausgestaltung ist die Kompensationsvorrichtung lösbar mit der Elektronikeinheit des vibronischen Sensors verbindbar. Sie kann beispielsweise als Nadeladapter oder ähnliches ausgestaltet sein. Weitere mögliche dem Fachmann allgemein bekannte Ausgestaltungen sind jedoch ebenfalls denkbar und fallen ebenfalls unter die vorliegende Erfindung.

Eine vorteilhafte Ausgestaltung der vorliegenden Erfindung sieht vor, dass die Überbrückungseinheit einen zumindest parallel zur elektromechanischen Wandlereinheit geschalteten Überbrückungszweig umfasst. Werden neben der elektromechanischen Wandlereinheit weitere Komponenten elektrisch überbrückt, ist der Überbrückungszweig bevorzugt ebenfalls parallel zu diesen Komponenten geschaltet.

Dabei ist es von Vorteil, wenn der Überbrückungszweig zumindest einen Kondensator, eine Spule, oder einen Widerstand umfasst. Diese elektrischen Bauteile dienen dabei als Ersatzschaltelement für die elektromechanische Wandlereinheit. Umfasst diese beispielsweise zumindest ein piezoelektrisches Element, so umfasst der Überbrückungszweig bevorzugt zumindest einen Kondensator. Im Falle eines elektromagnetischen Antriebs ist wiederum eine Spule bevorzugt. Zumindest eine Kenngröße des jeweiligen für diese Ausgestaltung in dem Überbrückungszweig verwendeten Bauteils ist dabei bevorzugt an zumindest eine korrespondierende Kenngröße der elektromechanischen Wandlereinheit angepasst.

Gemäß einer weiteren bevorzugten Ausgestaltung handelt es sich bei der Signalerzeugungseinheit um eine Einheit zur Erzeugung eines Signals variabler Frequenz, insbesondere um einen gesteuerten Oszillator. Es kommt dabei sowohl ein analog gesteuerter wie auch ein digital gesteuerter Oszillator in Frage. Mittels der Kompensationseinheit kann auf diese Weise die Frequenzabhängigkeit der durch die einzelnen Komponenten des Sensors hervorgerufenen Phasenverschiebungen ermittelt und eine frequenzabhängige Phasenkompensationsvorschrift berechnet werden.

Es ist von Vorteil, wenn die Kompensationsvorrichtung zumindest ein, insbesondere adaptives, Filter, insbesondere ein Bandpassfilter oder ein Resonatorfilter, umfasst. Diese Ausgestaltung eignet sich insbesondere für den Fall eines vibronischen Sensors gemäß der Schrift DE102014119061A1, wie bereits in der Beschreibungseinleitung beschrieben.

Ebenso ist es von Vorteil, wenn die Kompensationsvorrichtung zumindest eine Phasenkorrektureinheit umfasst, wie in der bereits in der Beschreibungseinleitung erwähnten bisher nicht veröffentlichten deutschen Patentanmeldung mit dem Aktenzeichen 102015112421.1 beschrieben. In diesem Falle kann zusätzlich der Einfluss auf die Phaseneinstellgenauigkeit durch verschiedene Prozessparameter berücksichtigt werden.

Die erfindungsgemäße Aufgabe wird ferner gelöst durch einen vibronischen Sensor zur Bestimmung zumindest einer Prozessgröße eines Mediums in einem Behältnis zumindest umfassend eine elektromechanische Wandlereinheit und eine Elektronikeinheit, wobei die Elektronikeinheit eine Kompensationsvorrichtung nach zumindest einem der vorhergehenden Ansprüche aufweist. Die Elektronikeinheit ist ferner dazu ausgestaltet,
- das Anregesignal ausgehend vom Empfangssignal zu erzeugen,
- mittels einer in der Elektronikeinheit vorgesehenen Phaseneinstelleinheit eine vorgebbare Phasenverschiebung zwischen dem Anregesignal und dem Empfangssignal einzustellen, und
- die zumindest eine Prozessgröße aus dem Empfangssignal zu bestimmen und/oder zu überwachen.

Auch in diesem Falle kann die dem vibronischen Sensor zugehörige Kompensationseinheit entweder lösbar mit demselben verbindbar oder als fester Bestandteil des vibronischen Sensors ausgestaltet sein. Der erfindungsgemäße, vibronische Sensor umfasst also Mittel zur Kalibrierung bzw. zum Abgleich zumindest einer seiner elektronischen Komponenten hinsichtlich der Phasenverschiebung zwischen Anregesignal und Empfangssignal.

Als Phaseneinstelleinheit kommen dabei alle dem Fachmann hinlänglich bekannten Varianten für vibronische Sensoren, wie sie in der Beschreibungseinleitung aufgezählt wurden, in Frage. Beispielsweise kann die Phaseneinstelleinheit zumindest ein Filter, insbesondere ein adaptives Filter umfassen, wie in der Druckschrift DE102014119061A1 beschrieben.

In einer Ausgestaltung umfasst die elektromechanische Wandlereinheit zumindest ein piezoelektrisches Element oder eine Spule.

In einer weiteren vorteilhaften Ausgestaltung umfasst der vibronischen Sensor weiterhin zumindest ein Schaltelement zum Hin- und Herschalten zwischen einem Messbetriebsmodus, in welchem die zumindest eine Prozessgröße bestimmt und/oder überwacht wird, und einem Kompensationsbetriebsmodus, in welchem die Phasenkorrekturvorschrift ermittelt und an die Phaseneinstelleinheit übergeben wird. Der Kompensationsbetriebsmodus lässt sich also wiederholt zu vorgebbaren Zeitpunkten, bzw. nach vorgebbaren Zeitintervallen aktivieren und die Phasenkorrekturvorschrift, welche von der Phaseneinstelleinheit des vibronischen Sensors verwendet wird, aktualisieren.

Bei der Prozessgröße handelt es sich gemäß einer weiteren Ausgestaltung um einen vorgebbaren Füllstand des Mediums in dem Behältnis, um die Dichte und/oder um die Viskosität des Mediums.

Eine Ausgestaltung sieht vor, dass eine schwingfähige Einheit, insbesondere eine Membran, ein Einstab oder eine Schwinggabel, vorgesehen ist.

Die erfindungsgemäße Aufgabe wird schließlich ebenfalls gelöst durch ein Verfahren zum Betreiben eines erfindungsgemäßen vibronischen Sensors zur Bestimmung und/oder Überwachung zumindest einer Prozessgröße, wobei in einem Kompensationsbetriebsmodus eine Phasenkompensationsvorschrift zur Kompensation zumindest einer durch zumindest eine Komponente einer Elektronikeinheit des vibronischen Sensors hervorgerufene Phasenverschiebung ermittelt wird, wobei in einem Messbetriebsmodus eine vorgebbare Phasenverschiebung zwischen dem Anregesignal und dem Empfangssignal eingestellt wird, wobei zur Einstellung der vorgebbaren Phasenverschiebung die Phasenkompensationsvorschrift berücksichtigt wird, und wobei die zumindest eine Prozessgröße bestimmt und/oder überwacht wird.

Hinsichtlich des Verfahrens ist es von Vorteil, wenn der Kompensationsbetriebsmodus einmalig bei Inbetriebnahme des Sensors ausgeführt wird, oder wenn der Kompensationsbetriebsmodus periodisch in wählbaren Zeitintervallen ausgeführt wird.

Ferner sieht eine Ausgestaltung des Verfahrens vor, dass mittels des Kompensationsbetriebsmodus zumindest eine durch eine Änderung der Umgebungstemperatur bedingte Phasenverschiebung zumindest einer Komponente der Elektronikeinheit kompensiert wird.

Gemäß einer weiteren Ausgestaltung des erfindungsgemäßen Verfahrens wird im Kompensationsbetriebsmodus ein einziges Test-Anregesignal mit einer ersten vorgebbaren Frequenz verwendet, und als Phasenkorrekturvorschrift die vorliegende erste Phasenverschiebung zwischen dem Test-Anregesignal und dem Test-Empfangssignal verwendet wird.

In einer alternativen Ausgestaltung des Verfahrens wird dagegen im Kompensationsbetriebsmodus zumindest ein erstes und ein zweites Test-Anregesignal mit zumindest einer ersten und einer zweiten Frequenz verwendet, wobei zumindest eine erste und eine zweite Phasenverschiebung zwischen dem ersten bzw. zweiten Test-Anregesignal und Test-Empfangssignal berechnet wird, wobei als Phasenkorrekturvorschrift zumindest aus den Werten der ersten und zweiten Frequenz und zumindest der ersten und zweiten Phasenverschiebung eine Polynomfunktion vorgebbarer, zumindest erster Ordnung, berechnet wird. Vorzugsweise entspricht die Anzahl an Test-Anregesignalen mit unterschiedlicher Frequenz fₙ dabei jeweils zumindest der Ordnung n' der Polynomfunktion.

Es sei darauf verwiesen, dass die Ausgestaltungen in Zusammenhang mit der Kompensationsvorrichtung, dem vibronischen Sensor und dem Verfahren sich mutatis mutandis jeweils aufeinander anwenden lassen.

Die Erfindung sowie ihre vorteilhaften Ausgestaltungen werden nachfolgend anhand der Figuren Fig. 1 - Fig. 3 näher beschrieben. Es zeigt:
Fig. 1: eine schematische Skizze eines vibronischen Sensors mit einer erfindungsgemäßen Kompensationseinheit,
Fig. 2: ein Blockschaltbild einer analogen Elektronikeinheit eines vibronischen Sensors mit einer erfindungsgemäßen Kompensationsvorrichtung, und
Fig. 3: ein Blockschaltbild einer digitalen Elektronikeinheit eines vibronischen Sensors mit einer erfindungsgemäßen Kompensationsvorrichtung.

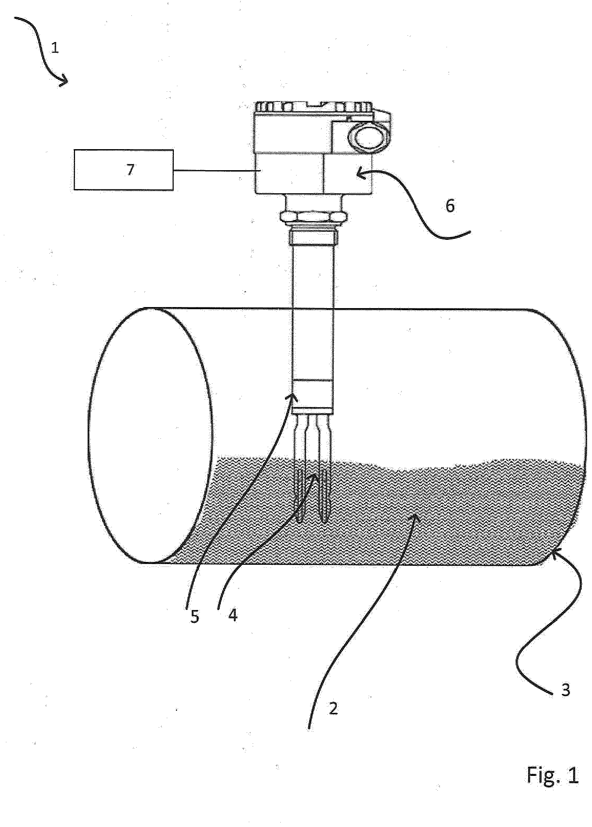

In Fig. 1 ist ein vibronischer Sensor 1 gezeigt. Dargestellt ist eine schwingfähige Einheit 4 in Form einer Schwinggabel, welche teilweise in ein Medium 2 eintaucht, welches sich in einem Behälter 3 befindet. Die schwingfähige Einheit wird mittels der Anrege-/Empfangseinheit 5 zu mechanischen Schwingungen angeregt, und kann beispielsweise ein piezoelektrischer Stapel- oder Bimorphantrieb sein. Es versteht sich jedoch von selbst, dass auch andere Ausgestaltungen eines vibronischen Sensors unter die Erfindung fallen. Weiterhin ist eine Elektronikeinheit 6 dargestellt, mittels welcher die Signalerfassung, -auswertung und/oder -speisung erfolgt. Die Elektronikeinheit ist ferner elektrisch leitend und lösbar mit einer erfindungsgemäßen Kompensationseinheit 7 verbunden, mittels welcher zumindest eine Phasenkompensationsvorschrift zur Kompensation zumindest einer durch eine Komponente des vibronischen Sensors 1 (insb. eine Komponente der Elektronikeinheit 6) verursachte zusätzliche Phasenverschiebung zwischen dem Anregesignal und Empfangssignal kompensierbar ist.

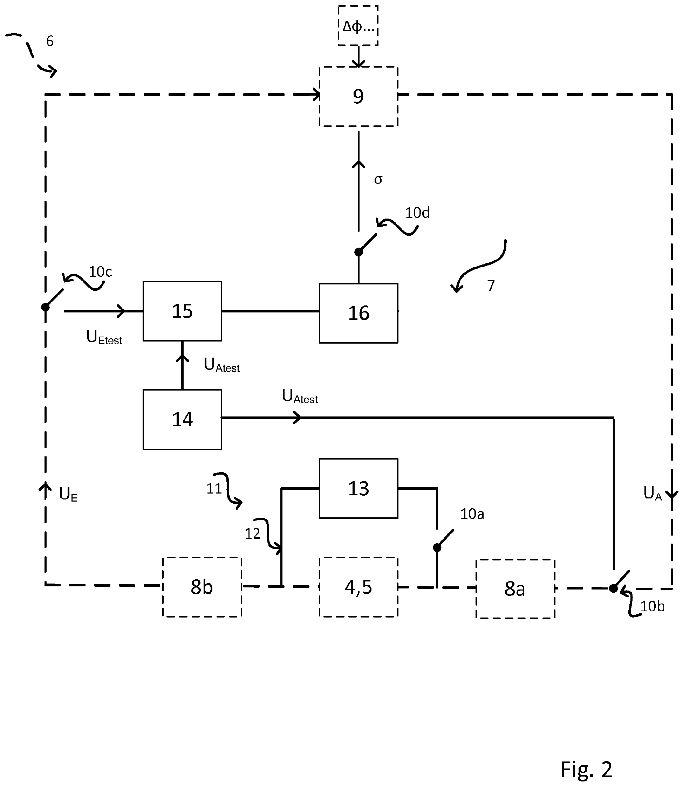

Ein Blockschaltbild eines vibronischen Sensors 1 mit analoger Elektronikeinheit 6 eines vibronischen Sensors 1 mit einer zugehörigen geeigneten Kompensationseinheit 7 ist Gegenstand von Fig. 2. Jene Komponenten, welche der Elektronikeinheit 6 des vibronischen Sensors 1 zuzuordnen sind, sind dabei jeweils in gestrichelten Linien dargestellt. In einem Messbetriebsmodus wird die schwingfähige Einheit 4 mittels der elektromechanischen Wandlereinheit 5 und mittels eines Anregesignals U_{A}, welches zuerst eine analoge Ausgangsstufe 8a passiert, zu mechanischen Schwingungen angeregt. Das von der schwingfähigen Einheit 4, bzw. der elektromechanischen Wandlereinheit 5 empfangene Empfangssignal U_{E} durchläuft zuerst eine analoge Eingangsstufe 8b, bevor es einer Phaseneinstelleinheit 9, beispielsweise einem Phasenschieber, zugeführt wird, welcher hier stellvertretend für alle diejenigen Komponenten der Elektronikeinheit 6 steht, welche unter anderem der Einstellung der vorgebbaren Phasenverschiebung Δϕ zwischen Anregesignal U_{A} und Empfangssignal U_{E}, der Auswertung des Empfangssignals U_{E} in Bezug auf die jeweilige Prozessgröße sowie der Erzeugung des Anregesignals U_{A} ausgehend vom Empfangssignal U_{E} dienen. Verschiedenste weitere analoge Betriebsarten für einen vibronischen Sensor 1 sind dem Fachmann aus dem Stand der Technik an sich bekannt, und beispielsweise in den in der Beschreibungseinleitung angeführten Dokumenten beschrieben, weswegen auf diesen Aspekt im Folgenden nicht detailliert eingegangen wird.

In der in Fig. 2 gezeigten Ausgestaltung der vorliegenden Erfindung wird der Kompensationsbetriebsmodus mittels der vier Schaltelemente 10a-10d gestartet. Die Kompensationseinheit 7 ist Teil der Elektronikeinheit 6 des vibronischen Sensors 1. Andere Ausgestaltungen können auch eine separate Kompensationseinheit 7 vorsehen, welche mit der Elektronikeinheit 6, insbesondere lösbar, verbindbar ist, beispielsweise in Form eines Nadeladapters.

Die Überbrückungseinheit 11 der Kompensationseinheit 7 umfasst einen parallel zur elektromechanischen Wandlereinheit 5 geschalteten Überbrückungszweig 12 mit einem Kondensator 13. Auf diese Weise werden im Kompensationsbetriebsmodus die durch die analoge Ausgangsstufe 8a und durch die analoge Eingangsstufe 8b hervorgerufenen Phasenverschiebungen gemeinsam in Form einer ersten vorliegenden Phasenverschiebung ΔΦₜₑₛₜ₁ detektiert und kompensiert. Die Überbrückungseinheit 11 kann in einer anderen Ausgestaltung aber auch zumindest eine weitere Komponente der Elektronikeinheit 6, beispielsweise die analoge Eingangsstufe 8b oder die analoge Ausgangsstufe 8a überbrücken. Dann wird diese zusätzlich überbrückte Komponente im Kompensationsbetriebsmodus nicht berücksichtigt. Um einzelne Komponenten für den Kompensationsbetriebsmodus auszuschließen, kann alternativ auch das Schaltelement 10b an einer anderen Position angeordnet werden. Im Falle, dass die analoge Ausgangsstufe 8a nicht berücksichtigt werden soll, muss das Schaltelement 10b beispielsweise im Blockschaltbild aus Fig. 2 zwischen dem vibronischen Sensor 4,5 und der analogen Ausgangsstufe 8a angeordnet werden. Im letztgenannten Fall lassen sich beispielsweise durch gezielte Variation der Schaltungen die durch einzelne Komponenten der Elektronikeinheit 6 hervorgerufenen Phasenverschiebungen ΔΦₜₑₛₜ₁, ΔΦₜₑₛₜ₂,... je einzeln ermitteln und ggf. anschließend gemeinsam kompensieren.

Während des Kompensationsbetriebsmodus wird mittels der Signalerzeugungseinheit 14 - hier ein gesteuerter Oszillator - zumindest ein erstes Test-Anregesignal U_{Atest1} einer ersten vorgebbaren Frequenz f₁ erzeugt. Die Frequenz f₁ ist dabei bevorzugt identisch zur Frequenz f des Anregesignals U_{A}. Das Test-Anregesignal U_{Atest1} durchläuft die analoge Ausgangsstufe 8a, die Überbrückungseinheit 11 und die analoge Eingangsstufe 8b, und wird anschließend der Phasendetektionseinheit 15 zugeführt. Für die Phasendetektionseinheit 15 sind unterschiedlichste, sowohl analoge als auch digitale Ausgestaltungen denkbar, welche dem Fachmann hinlänglich bekannt sind und welche alle unter die vorliegende Erfindung fallen. Außerdem wird der Phasendetektionseinheit 15 von der Signalerzeugungseinheit 14 ebenfalls das Test-Anregesignal U_{Atest1} zugeführt, so dass sie die zwischen dem Test-Anregesignal U_{Atest1} und das Test-Empfangssignal U_{Etest1} vorliegende erste Phasenverschiebung ΔΦₜₑₛₜ₁ bestimmen kann. Eine Recheneinheit 16 ermittelt anschließend zumindest aus der ersten Phasenverschiebung ΔΦₜₑₛₜ₁ eine Phasenkompensationsvorschrift σ. Im Falle, dass eine Frequenzabhängigkeit der durch die Komponenten des vibronischen Sensors verursachten Phasenverschiebungen zu berücksichtigen ist, sind die Signalerzeugungseinheit 14, die Phasendetektionseinheit 15 sowie die Recheneinheit 16 ferner dazu ausgestaltet, zumindest zwei Test-Anregesignale U_{Atest1}, U_{Atest2} mit zwei verschiedenen Frequenzen f₁ und f₂ zu erzeugen, die zwei Test-Empfangssignale U_{Etest1}, U_{Etest2} zu empfangen, die zwei Phasenverschiebungen ΔΦₜₑₛₜ₁ und ΔΦₜₑₛₜ₂ zu ermitteln und daraus eine Phasenkompensationsvorschrift σ zu berechnen.

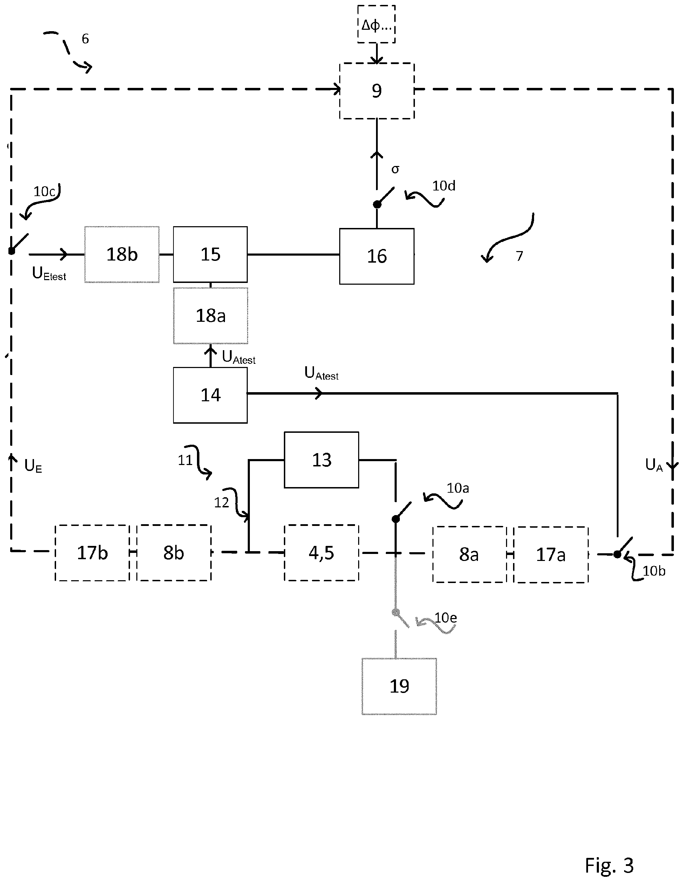

Eine, insbesondere für eine digitale Elektronikeinheit 6 eines vibronischen Sensor 1 geeignete Kompensationseinheit 7 ist schließlich - ebenfalls in Form eines Blockschaltbildes - in Fig. 3 dargestellt. Auf Komponenten, welche in Zusammenhang mit Fig. 2 bereits erläutert wurden, wird im Folgenden nicht erneut eingegangen. Im Unterschied zu der analogen Elektronikeinheit 6 gemäß Fig.2 umfasst die digitale Elektronikeinheit 6 gemäß Fig. 3 zusätzlich einen Analog-Digital-Wandler 17b und einen Digital-Analog-Wandler 17, welche Bauteile beide im Rahmen des Kompensationsbetriebsmodus hinsichtlich ihrer Phasenverschiebungen berücksichtigt werden.

Optional kann der Kompensationsvorrichtung 7 weiterhin zumindest ein Filter, insbesondere ein adaptives Filter 18a - in der hier gezeigten Ausführung sind zwei Filter 18a, 18b vorgesehen - zugeordnet sein. Diese Ausgestaltung ist insbesondere geeignet für einen vibronischen Sensor, wie er in der DE102012101667A1 beschrieben ist, geeignet. In diesem Fall sind die Filter 18a, 18b insbesondere an das adaptive Filter [hier nicht separat eingezeichnet] der Elektronikeinheit 6 des vibronischen Sensors 1 angepasst, und insbesondere baugleich zu diesem.

Eine weiterer optionaler Zusatz besteht in der Integration eines Referenzelements 19, welches über ein fünftes Schaltelement 10e bedienbar ist. Das Referenzelement 19 kann - je nach Ausgestaltung der elektromechanischen Wandlereinheit 5, beispielsweise gegeben sein durch einen Kondensator oder eine Spule. Dieses Referenzelement 19 dient der Bestimmung einer durch zumindest einen Prozessparameter hervorgerufenen zusätzlichen Phasenverschiebung, wie in der bisher unveröffentlichten deutschen Patentanmeldung mit dem Aktenzeichen 102015112421.1 beschrieben.

### Bezugszeichenliste

- 1: Vibronischer Sensor
- 2: Medium
- 3: Behälter
- 4: Schwingfähige Einheit
- 5: Elektromechanische Wandlereinheit
- 6: Elektronikeinheit
- 7: Kompensationseinheit
- 8a,8b: analoge Ausgangsstufe, analoge Eingangsstufe
- 9: Phaseneinstelleinheit
- 10a-10e: Schaltelemente
- 11: Überbrückungseinheit
- 12: Überbrückungszweig
- 13: Kondensator
- 14: Signalerzeugungseinheit
- 15: Phasendetektionseinheit
- 16: Recheneinheit
- 17a, 17b: Digital-Analog-Wandler, Analog-Digital-Wandler
- 18a, 18b: Filter
- 19: Referenzelement

- U_{A}: Anregesignal
- U_{E}: Empfangssignal
- U_{Atest1},U_{Atest2}: erstes, zweites Test-Anregesignal
- U_{Etest1},U_{Etest2}: erstes, zweites Test-Anregesignal
- f1, f2: erste, zweite Frequenz
- ΔΦ: vorgebbare Phasenverschiebung
- ΔΦₜₑₛₜ₁, ΔΦₜₑₛₜ₂: durch Komponente hervorgerufene Phasenverschiebung
- σ: Phasenkompensationsvorschrift

## Patentansprüche

1. Kompensationsvorrichtung (7) zur Kompensation zumindest einer durch zumindest eine Komponente (8a,8b,17a,17b) einer Elektronikeinheit (6) eines vibronischen Sensors (1) hervorgerufene Phasenverschiebung (ΔΦₜₑₛₜ₁, ΔΦₜₑₛₜ₂), wobei der vibronische Sensor (1) zumindest eine elektromechanische Wandlereinheit (5) aufweist, und
wobei es sich bei der zumindest einen Komponente (8a,8b,17a,17b) um eine analoge Eingangsstufe (8b) oder um eine analoge Ausgangsstufe (8a), beispielweise um einen Operationsverstärker, insbesondere einen Ladungsverstärker, einen Impedanzwandler, ein Filter, insbesondere ein Antialiasing-Filter, handelt, oder wobei es sich um einen Analog-Digital-Wandler (17b), einen Digital-Analog-Wandler (17a), eine Transistorstufe oder einen analogen Schalter des vibronischen Sensors (1) handelt,
wobei die Kompensationsvorrichtung (7) zumindest umfasst:
- eine Überbrückungseinheit (11) zur elektrischen Überbrückung zumindest der elektromechanischen Wandlereinheit (5),
- eine Signalerzeugungseinheit (14) zur Erzeugung zumindest eines ersten Test-Anregesignals (U_{Atest1}) in Form eines elektrischen Wechselsignals mit einer ersten wählbaren Frequenz (f₁),
- eine Phasendetektionseinheit (15) zur Bestimmung zumindest einer vorliegenden ersten Phasenverschiebung (ΔΦₜₑₛₜ₁) zwischen dem Test-Anregesignal (U_{Atest1}) und zumindest einem ersten Test-Empfangssignal (U_{Etest1}), welches zumindest die Überbrückungseinheit (11) und die zumindest eine Komponente (8a,8b,17a,17b) der Elektronikeinheit (6) durchläuft, und
- eine Recheneinheit (16) welche zumindest aus der ersten Phasenverschiebung (ΔΦₜₑₛₜ₁) eine Phasenkompensationsvorschrift (σ) ermittelt, **dadurch gekennzeichnet, dass** die Kompensationsvorrichtung (7) dazu ausgestaltet ist zur Bestimmung der Phasenkompensationsvorschrift (σ) zumindest die elektromechanische Wandlereinheit (5) des vibronischen Sensors (1) zu überbrücken, und
dass die Phasenkompensationsvorschrift (σ) an eine Phaseneinstelleinheit (9) der Elektronikeinheit (6) des vibronischen Sensors (1) zu übergeben, welche die Phasenkompensationsvorschrift (σ) bei der Einstellung einer vorgebbaren Phasenverschiebung (ΔΦ) berücksichtigt.

2. Kompensationsvorrichtung (7) nach Anspruch 1,
wobei die Kompensationsvorrichtung (7) lösbar mit der Elektronikeinheit (6) des vibronischen Sensors (1) verbindbar ist.

3. Kompensationsvorrichtung (7) nach Anspruch 1 oder 2,
wobei die Überbrückungseinheit (11) einen zumindest parallel zur elektromechanischen Wandlereinheit (5) geschalteten Überbrückungszweig (12) umfasst.

4. Kompensationsvorrichtung (7) nach Anspruch 3,
wobei der Überbrückungszweig (12) zumindest einen Kondensator (13), eine Spule, oder einen Widerstand umfasst.

5. Kompensationsvorrichtung (7) nach zumindest einem der vorhergehenden Ansprüche, wobei es sich bei der Signalerzeugungseinheit (14) um eine Einheit zur Erzeugung eines Signals variabler Frequenz, insbesondere um einen gesteuerten Oszillator, handelt.

6. Kompensationsvorrichtung (7) nach zumindest einem der vorhergehenden Ansprüche, mit zumindest einem, insbesondere adaptiven Filter (18a,18b), insbesondere ein Bandpassfilter oder ein Resonatorfilter.

7. Kompensationsvorrichtung (7) nach zumindest einem der vorhergehenden Ansprüche, umfassend eine Phasenkorrektureinheit (19).

8. Vibronischer Sensor (1) zur Bestimmung zumindest einer Prozessgröße eines Mediums (2) in einem Behältnis (3) zumindest umfassend eine elektromechanische Wandlereinheit (5) und eine Elektronikeinheit (6),
wobei die Elektronikeinheit (6) eine Kompensationsvorrichtung (7) nach zumindest einem der vorhergehenden Ansprüche aufweist, und
wobei die Elektronikeinheit (6) dazu ausgestaltet ist,
das Anregesignal (U_{A}) ausgehend vom Empfangssignal (U_{E}) zu erzeugen,
- mittels einer in der Elektronikeinheit (6) vorgesehenen Phaseneinstelleinheit (9) eine vorgebbare Phasenverschiebung (ΔΦ) zwischen dem Anregesignal (U_{A}) und dem Empfangssignal (U_{E}) einzustellen, und
- die zumindest eine Prozessgröße aus dem Empfangssignal (U_{E}) zu bestimmen und/oder zu überwachen.

9. Vibronischer Sensor (1) nach Anspruch 8,
mit zumindest einem Schaltelement (10a-10d) zum Hin- und Herschalten zwischen einem Messbetriebsmodus, in welchem die zumindest eine Prozessgröße bestimmt und/oder überwacht wird, und einem Kompensationsbetriebsmodus, in welchem die Phasenkorrekturvorschrift (σ) ermittelt und an die Phaseneinstelleinheit (9) übergeben wird.

10. Verfahren zum Betreiben eines vibronischen Sensors (1) zur Bestimmung und/oder Überwachung zumindest einer Prozessgröße nach zumindest einem der Ansprüche 8 oder 9,
wobei in einem Kompensationsbetriebsmodus eine Phasenkompensationsvorschrift (σ) zur Kompensation zumindest einer durch zumindest eine Komponente (8a,8b,17a,17b) einer Elektronikeinheit (6) des vibronischen Sensors (1) hervorgerufene Phasenverschiebung (ΔΦₜₑₛₜ₁) ermittelt wird,
wobei in einem Messbetriebsmodus eine vorgebbare Phasenverschiebung (ΔΦ) zwischen dem Anregesignal (U_{A}) und dem Empfangssignal (U_{E}) eingestellt wird, wobei zur Einstellung der vorgebbaren Phasenverschiebung (ΔΦ) die Phasenkompensationsvorschrift (σ) berücksichtigt wird, und
wobei die zumindest eine Prozessgröße bestimmt und/oder überwacht wird.

11. Verfahren nach Anspruch 10,
wobei der Kompensationsbetriebsmodus einmalig bei Inbetriebnahme des Sensors (1) ausgeführt wird, oder wobei der Kompensationsbetriebsmodus periodisch in wählbaren Zeitintervallen ausgeführt wird.

12. Verfahren nach Anspruch 10 oder 11,
wobei mittels des Kompensationsbetriebsmodus zumindest eine durch eine Änderung der Umgebungstemperatur bedingte Phasenverschiebung zumindest einer Komponente der Elektronikeinheit (6) kompensiert wird.

13. Verfahren nach zumindest einem der Ansprüche 10-12,
wobei im Kompensationsbetriebsmodus ein einziges Test-Anregesignal mit einer ersten vorgebbaren Frequenz verwendet wird, und
wobei als Phasenkorrekturvorschrift (σ) die vorliegende erste Phasenverschiebung (ΔΦₜₑₛₜ₁) zwischen dem Test-Anregesignal (U_{Atest1}) und dem Test-Empfangssignal (U_{Etest1}) verwendet wird.

14. Verfahren nach zumindest einem der Ansprüche 10-13,
wobei im Kompensationsbetriebsmodus zumindest ein erstes (U_{Atest1}) und ein zweites (U_{Atest2}) Test-Anregesignal mit zumindest einer ersten (f₁) und einer zweiten (f₂) Frequenz verwendet wird,
wobei zumindest eine erste (ΔΦₜₑₛₜ₁) und eine zweite (ΔΦₜₑₛₜ₂) Phasenverschiebung zwischen dem ersten (U_{Atest1}) bzw. zweiten (U_{Atest2}) Test-Anregesignal und ersten (U_{Etest1}) und zweitem (U_{Etest2}) Test-Empfangssignal berechnet wird,
wobei als Phasenkorrekturvorschrift (σ) zumindest aus den Werten der ersten (f₁) und zweiten (f₂) Frequenz und zumindest der ersten (ΔΦₜₑₛₜ₁) und zweiten (ΔΦₜₑₛₜ₂) Phasenverschiebung eine Polynomfunktion vorgebbarer, zumindest erster Ordnung berechnet wird.

## Claims

1. Compensation unit (7) for the compensation of at least a phase shift (ΔΦₜₑₛₜ₁, ΔΦₜₑₛₜ₂) caused by at least a component (8a, 8b, 17a, 17b) of an electronic unit (6) of a vibronic sensor (1), wherein the vibronic sensor (1) has at least an electromechanical transducer unit (5), and
wherein the at least one component (8a, 8b, 17a, 17b) is an analog input stage (8b) or an analog output stage (8a), for example an operational amplifier, particularly a charge amplifier, an impedance converter, a filter, particularly an anti-aliasing filter, or wherein the at least one component (8a, 8b, 17a, 17b) is an analog-digital converter (17b), a digital-analog converter (17a), a transistor stage or an analog switch of the vibronic sensor (1),
wherein the compensation unit (7) comprises at least:
- a bridging unit (11) designed to electrically bridge at least the electromechanical transducer unit (5),
- a signal generation unit (14) designed to generate at least a first test excitation signal (U_{Atest1}) in the form of an electrical alternating signal with a first selectable frequency (f₁),
- a phase detection unit (15) designed to determine at least a first phase shift (ΔΦₜₑₛₜ₁) present between the test excitation signal (U_{Atest1}) and at least a first test reception signal (U_{Etest1}), said reception signal at least running through the bridging unit (11) and the at least one component (8a, 8b, 17a, 17b) of the electronic unit (6), and
- a computing unit (16) which determines a phase compensation rule (σ) at least from the first phase shift (ΔΦₜₑₛₜ₁),
**characterized in that**
the compensation unit (7) is designed to bridge at least the electromechanical transducer unit (5) of the vibronic sensor (1) for the purpose of determining the phase compensation rule (σ), and for the purpose of transmitting the phase compensation rule (σ) to a phase regulation unit (9) of the electronic unit (6) of the vibronic sensor (1), wherein said unit takes the phase compensation rule (σ) into consideration during the regulation of a predefinable phase shift (ΔΦ).

2. Compensation unit (7) as claimed in Claim 1,
wherein the compensation unit (7) can be connected to the electronic unit (6) of the vibronic sensor (1) in a detachable manner.

3. Compensation unit (7) as claimed in Claim 1 or 2,
wherein the bridging unit (11) at least comprises a bridging branch (12) coupled in parallel to the electromechanical transducer unit (5).

4. Compensation unit (7) as claimed in Claim 3,
wherein the bridging branch (12) at least comprises a capacitor (13), a coil or a resistor.

5. Compensation unit (7) as claimed in at least one of the previous claims,
wherein the signal generation unit (14) is a unit for generating a signal of variable frequency, particularly a controlled oscillator.

6. Compensation unit (7) as claimed in at least one of the previous claims, with at least a filter (18a, 18b), particularly an adaptive filter, particularly a bandpass filter or a resonator filter.

7. Compensation unit (7) as claimed in at least one of the previous claims, comprising a phase correction unit (19).

8. Vibronic sensor (1) designed to determine at least one process variable of a medium (2) in a vessel (3), comprising at least an electromechanical transducer unit (5) and an electronic unit (6),
wherein the electronic unit (6) has a compensation unit (7) as claimed in at least one of the previous claims, and
wherein the electronic unit (6) is designed to generate the excitation signal (U_{A}) on the basis of the reception signal (U_{E})
- to regulate a predefinable phase shift (ΔΦ) between the excitation signal (U_{A}) and the reception signal (U_{E}) by means of a phase regulation unit (9) provided in the electronic unit (6), and
- to determine and/or monitor the at least one process variable from the reception signal (U_{E}).

9. Vibronic sensor (1) as claimed in Claim 8,
with at least a switching element (10a-10d) to switch back and forth between a measuring mode in which the at least one process variable is determined and/or monitored, and a compensation mode in which the phase correction rule (σ) is determined and transmitted to the phase regulation unit (9).

10. Procedure for operating a vibronic sensor (1) designed to determine and/or monitor at least a process variable as claimed in at least one of the Claims 8 or 9, wherein, in a compensation mode, a phase compensation rule (σ) is determined for the purpose of compensating at least a phase shift (ΔΦₜₑₛₜ₁) caused by at least one component (8a, 8b, 17a, 17 b) of an electronic unit (6) of the vibronic sensor (1),
wherein, in a measuring mode, a predefinable phase shift (ΔΦ) is set between the excitation signal (U_{A}) and the reception signal (U_{E}),
wherein the phase compensation rule (σ) is taken into consideration during the setting of the predefinable phase shift (ΔΦ), and
wherein the at least one process variable is determined and/or monitored.

11. Procedure as claimed in Claim 10,
wherein the compensation mode is executed once during the commissioning of the sensor (1), or
wherein the compensation mode is executed periodically in selectable time intervals.

12. Procedure as claimed in Claim 10 or 11,
wherein at least a phase shift of at least one component of the electronic unit (6), caused by a change in the ambient temperature, is compensated for by means of the compensation mode.

13. Procedure as claimed in at least one of the Claims 10 to 12,
wherein a unique test excitation signal with a first predefinable frequency is used in the compensation mode, and
wherein the first phase shift (ΔΦₜₑₛₜ₁) present between the test excitation signal (U_{Atest1}) and the test reception signal (U_{Etest1}) is used as a phase correction rule (σ).

14. Procedure as claimed in at least one of the Claims 10 to 13,
wherein at least a first (U_{Atest1}) and a second (U_{Atest2}) test excitation signal with at least a first frequency (f₁) and a second frequency (f₂) is used in the compensation mode,
wherein at least a first phase shift (ΔΦₜₑₛₜ₁) and a second phase shift (ΔΦₜₑₛₜ₂) is calculated between the first test excitation signal (U_{Atest1}) or the second test excitation signal (U_{Atest2}) and the first test reception signal (U_{Etest1}) or the second test reception signal (U_{Etest2}),
wherein a predefinable polynomial function, at least of the first order, is calculated as a phase correction rule (σ) at least from the values of the first frequency (f₁) and of the second frequency (f₂) and at least from the values of the first phase shift (ΔOₜₑₛₜ₁) and of the second phase shift (ΔΦₜₑₛₜ₂).

## Revendications

1. Dispositif de compensation (7) destiné à la compensation d'au moins un déphasage (ΔΦₜₑₛₜ₁, ΔΦₜₑₛₜ₂) provoqué par au moins un composant (8a, 8b, 17a, 17b) d'une unité électronique (6) d'un capteur vibronique (1), le capteur vibronique (1) présentant au moins une unité de transducteur électromécanique (5), et
dispositif pour lequel il s'agit, concernant l'au moins un composant (8a, 8b, 17a, 17b), d'un étage d'entrée analogique (8b) ou d'un étage de sortie analogique (8a), par exemple un amplificateur opérationnel, notamment un amplificateur de charge, un convertisseur d'impédance, un filtre, notamment un filtre antirepliement, ou dispositif pour lequel il s'agit, concernant l'au moins un composant (8a, 8b, 17a, 17b), d'un convertisseur analogique-numérique (17b), d'un convertisseur numérique-analogique (17a), d'un étage à transistor ou d'un commutateur analogique du capteur vibronique (1),
le dispositif de compensation (7) comprenant au moins :
- une unité de pontage (11) destinée à ponter électriquement au moins l'unité de transducteur électromécanique (5),
- une unité de génération de signal (14) destinée à générer au moins un premier signal d'excitation de test (U_{Atest1}) sous la forme d'un signal électrique alternatif ayant une première fréquence (f₁) sélectionnable,
- une unité de détection de phase (15) destinée à déterminer au moins un premier déphasage (ΔΦₜₑₛₜ₁) présent entre le signal d'excitation de test (U_{Atest1}) et au moins un premier signal de réception de test (U_{Etest1}), lequel signal de réception traverse au moins l'unité de pontage (11) et l'au moins un composant (8a, 8b, 17a, 17b) de l'unité électronique (6), et
- une unité de calcul (16) qui détermine une règle de compensation de phase (σ) au moins à partir du premier déphasage (ΔΦₜₑₛₜ₁),
**caractérisé**
**en ce que** le dispositif de compensation (7) est conçu pour ponter au moins l'unité de transducteur électromécanique (5) du capteur vibronique (1) en vue de déterminer la règle de compensation de phase (σ), et en vue de transmettre la règle de compensation de phase (σ) à une unité de réglage de phase (9) de l'unité électronique (6) du capteur vibronique (1), laquelle unité tient compte de la règle de compensation de phase (σ) lors du réglage d'un déphasage (ΔΦ) prédéfinissable.

2. Dispositif de compensation selon la revendication 1,
pour lequel le dispositif de compensation (7) peut être connecté de manière amovible à l'unité électronique (6) du capteur vibronique (1).

3. Dispositif de compensation selon la revendication 1 ou 2,
pour lequel l'unité de pontage (11) comprend au moins une branche de pontage (12) couplée en parallèle avec l'unité de transducteur électromécanique (5).

4. Dispositif de compensation selon la revendication 3,
pour lequel la branche de pontage (12) comprend au moins un condensateur (13), une bobine ou une résistance.

5. Dispositif de compensation selon au moins l'une des revendications précédentes, pour lequel l'unité de génération de signal (14) est une unité pour générer un signal à fréquence variable, notamment un oscillateur commandé.

6. Dispositif de compensation (7) selon au moins l'une des revendications précédentes, avec au moins un filtre (18a, 18b), notamment adaptatif, notamment un filtre passe-bande ou un filtre résonateur.

7. Dispositif de compensation (7) selon au moins l'une des revendications précédentes, comprenant une unité de correction de phase (19).

8. Capteur vibronique (1) destiné à déterminer au moins une grandeur de process d'un produit (2) dans un réservoir (3), comprenant au moins une unité de transducteur électromécanique (5) et une unité électronique (6),
l'unité électronique (6) présentant un dispositif de compensation (7) selon au moins l'une des revendications précédentes, et
l'unité électronique (6) étant conçue pour générer le signal d'excitation (U_{A}) sur la base du signal de réception (U_{E})
- pour régler un déphasage (ΔΦ) prédéfinissable entre le signal d'excitation (U_{A}) et le signal de réception (U_{E}) au moyen d'une unité de réglage de phase (9) prévue dans l'unité électronique (6), et
- pour déterminer et/ou surveiller au moins une variable de process à partir du signal de réception (U_{E}).

9. Capteur vibronique (1) selon la revendication 8,
avec au moins un élément de commutation (10a-10d) pour la commutation entre un mode de mesure, dans lequel l'au moins une grandeur de process est déterminée et/ou surveillée, et un mode de compensation, dans lequel la règle de correction de phase (σ) est déterminée et transmise à l'unité de réglage de phase (9).

10. Procédé pour l'exploitation d'un capteur vibronique (1) destiné à déterminer et/ou à surveiller au moins une grandeur de process selon au moins l'une des revendications 8 ou 9,
procédé pour lequel, dans un mode de compensation, on détermine une règle de compensation de phase (σ) en vue de compenser au moins un déphasage (ΔΦₜₑₛₜ₁) provoqué par au moins un composant (8a, 8b, 17a, 17 b) d'une unité électronique (6) du capteur vibronique (1),
un déphasage (ΔΦ) prédéfinissable entre le signal d'excitation (U_{A}) et le signal de réception (U_{E}) étant réglé dans un mode de mesure,
la règle de compensation de phase (σ) étant prise en compte pour le réglage du déphasage (ΔΦ) prédéfinissable, et
l'au moins une grandeur de process étant déterminée et/ou surveillée.

11. Procédé selon la revendication 10,
pour lequel le mode de compensation est exécuté une unique fois lorsque le capteur (1) est mis en service, ou
pour lequel le mode de compensation est exécuté périodiquement à des intervalles de temps sélectionnables.

12. Procédé selon la revendication 10 ou 11,
pour lequel au moins un déphasage d'au moins un composant de l'unité électronique (6) causé par une modification de la température ambiante est compensé au moyen du mode de compensation.

13. Procédé selon au moins l'une des revendications 10 à 12,
pour lequel un unique signal d'excitation de test avec une première fréquence prédéfinissable est utilisé dans le mode de compensation, et
le premier déphasage (ΔΦₜₑₛₜ₁) présent entre le signal d'excitation de test (U_{Atest1}) et le signal de réception de test (U_{Etest1}) est utilisé comme règle de correction de phase (σ).

14. Procédé selon au moins l'une des revendications 10 à 13,
pour lequel au moins un premier (U_{Atest1}) et un deuxième (U_{Atest2}) signal d'excitation de test ayant au moins une première fréquence (f₁) et une deuxième fréquence (f₂) sont utilisés dans le mode de compensation,
au moins un premier déphasage (ΔΦₜₑₛₜ₁) et un deuxième déphasage (ΔΦₜₑₛₜ₂) entre le premier signal d'excitation de test (U_{Atest1}) ou le deuxième signal d'excitation de test (U_{Atest2}) et le premier signal de réception de test (U_{Etest1}) ou le deuxième signal de réception de test (U_{Etest2}) étant calculé,
une fonction polynomiale prédéfinissable, au moins de premier ordre, étant calculée comme règle de correction de phase (σ) au moins à partir des valeurs de la première fréquence (f₁) et de la deuxième fréquence (f₂) et au moins à partir des valeurs du premier déphasage (ΔΦₜₑₛₜ₁) et du deuxième déphasage (ΔΦₜₑₛₜ₂).
